# EUROPEAN PATENT APPLICATION

(11) **EP 1 458 139 A1**
(43) Date of publication of application: **15.09.2004**
(21) Application number: 03290652.1
(22) Date of filing: 14.03.2003
(51) Int. Cl.: H04L 12/28, H04L 12/56, H04B 7/26

(54) **CDMA access method for channel allocation in an ad-hoc wireless network system (WPAN, scatternet)**

(71) Applicant: Mitsubishi Electric Information Technology Centre Europe B.V., 35700 Rennes (FR); MITSUBISHI DENKI KABUSHIKI KAISHA, Tokyo 100-8310 (JP)
(72) Inventor: Seguin, Laure, 35000 Rennes (FR)
(74) Representative: Blot, Philippe Robert Emile

(57) **Abstract**

The invention concerns a method for channel allocation in an ad-hoc radio communication system comprising devices gathered in several piconets. A piconet coordinator (PNC) is defined for each piconet. A Code Division Multiple Access (CDMA) scheme is implemented. The set of available codes is split into pre-defined disjoined subsets of codes (Cᵢ) known by each device. In each subset (Cᵢ), one code denoted Cᵢ^{be}) is used for broadcast.

For each new device added in the system, the method includes the following steps:
- the new device scans its radio environment looking for at least one used subset of codes (Cₖ) which is associated to a piconet,
- depending on the or each found used subset of codes (Cₖ):
   · the new device becomes a piconet coordinator (PNC), or
   · the new device joins an existing piconet among a set of available piconets.

## Description

The present invention concerns a method for channel allocation in an ad-hoc radio communication system comprising devices having an equivalent communication architecture, the devices being gathered in several piconets, the devices of a same piconet being able to communicate with one another, a piconet coordinator (PNC) being defined among the devices for each piconet, the multiple access scheme for the radio communication between the devices being a Code Division Multiple Access (CDMA) scheme.

The invention is particularly suitable in local radio network like an office network linking computers, printers, DVD readers, video recorder and TV.

In cellular networks, communications control is centralized at a point known as a base station. The base station is characterized by a particular architecture.

On the contrary, in an ad-hoc network, all devices have an equivalent communication architecture and have peer-to-peer communication. Specific protocols have to be set up for networking and connecting between two devices.

The 802.15.3 system is currently standardized in IEEE. This standard provides an ad-hoc network but with a centralized access in each elementary network which is called a piconet. A Piconet Coordinator (PNC) takes the role of central controller inside each piconet. The associated piconet extends approximately 10 m around the piconet coordinator. Hence, the piconet coordinator is responsible for allocating to the devices of its piconet the resources necessary for their communications. The multiple access technique used in such systems is Time Division Multiple Access (TDMA). The separation of piconets is obtained through frequency division. Two neighbouring piconets use two different frequency bands.

A new physical layer is currently proposed to reach even higher bit rates than in 802.15.3. That new physical layer is known by the acronym UWB for Ultra Wide Band. This new physical layer is planed to be associated with a multiple access technique based on code division (CDMA).

The aim of the invention is to provide a method for channel allocation in an ad-hoc network with CDMA multiple access scheme.

Accordingly, the subject-matter of the invention is a method for channel allocation in an ad-hoc radio communication system, as defined in claim 1.

According to particular embodiments, the method comprising the features of one or more sub-claims.

The invention will be better understood on reading the description which follows, given merely by way of example and while referring to the drawings in which :
- figure 1 is a schematic view of an ad-hoc radio communication system according to the invention ;
- figure 2 is a table stored in each device of the ad-hoc radio communication system ;
- figure 3 is a flow chart explaining the method for channel allocation for a new device in an ad-hoc radio communication system according to the invention ; and
- figure 4 is a chart explaining the messages sent between devices of a piconet when a new device joins an existing piconet.

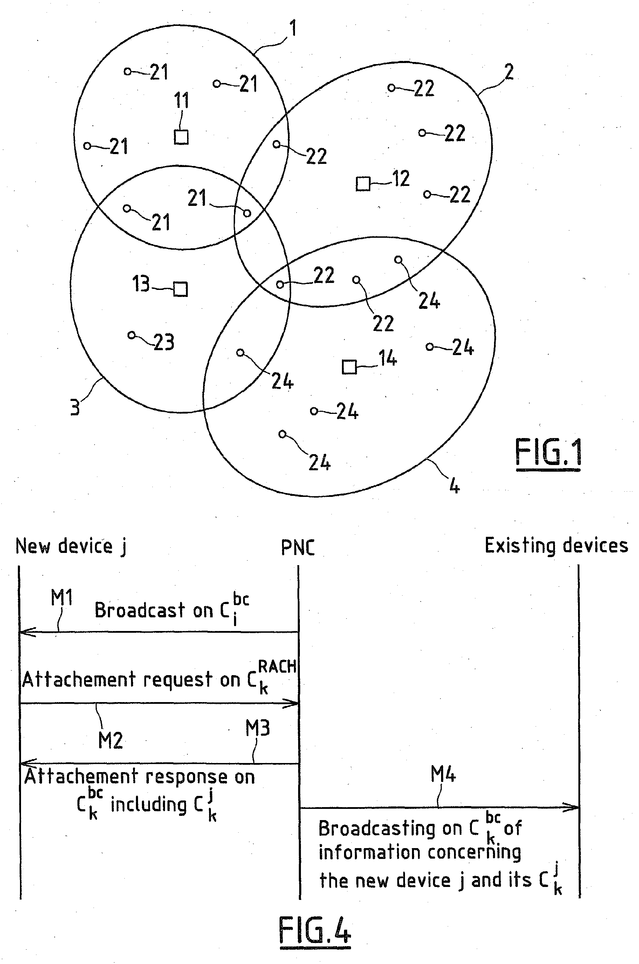

Figure 1 shows an ad-hoc radio communication system which is assumed to be based on IEEE 802.15.3 standard, except for the additional features which are provided by the invention.

The system includes several devices which have an equivalent communication architecture. All of them are adapted to send and receive messages through radio links.

The devices are, for example, computers, printers, cameras and recorders.

The devices are gathered in piconets. All the devices contained in a same piconet are able to communicate with one another. Four piconets 1, 2, 3, 4 are shown on figure 1. Each piconet includes a piconet coordinator PNC denoted by 11, 12, 13 and 14.

The way each piconet coordinator is defined among the devices of a piconet is explained hereafter.

Each piconet includes other devices 21, 22, 23, 24 which are not piconet coordinator and which are adapted to communicate with one another and with their associated piconet coordinator 11, 12, 13, 14.

The multiple access scheme for the radio communication between the ad-hoc radio communication system devices is a Code Division Multiple Access scheme (CDMA) scheme.

It is considered that a set C of N_{c} codes is available for channel allocation. For example N_{c} = 100. C is divided into n subsets Cᵢ, i∈{1,...,n}. For example n = 5.

According to the invention, each subset Cᵢ is allocated to each piconet.

In each subset Cᵢ, one code denoted Cᵢ^{bc} is used for broadcast only. Another code denoted Cᵢ^{RACH} is used for random access only. The other codes denoted Cᵢ^{j} are used for reception of data by a particular device j of the piconet.

All the system devices have a pre-knowledge of the subsets Cᵢ and especially of Cᵢ^{bc} and Cᵢ^{RACH}.

Thus, each device includes a memory, like a Read Only Memory in which all the available codes are stored.

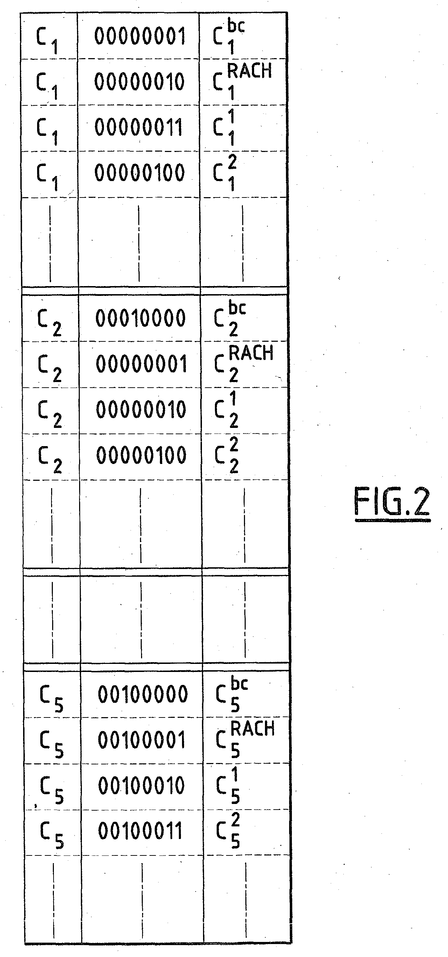

More precisely and as shown on figure 2, the memory of each device includes a table which contains, for each subset of codes Cᵢ, the broadcast code Cᵢ^{bc}, the random access code Cᵢ^{RACH} and the reception codes C^{j}ᵢ. In addition, a short address on 8 bits is associated to each code. This address corresponds to a pointer which is an indication of the associated code.

According to the invention, all the devices of a same piconet use the codes of the same subset of codes for the communication. Thus, a subset of codes Cᵢ is associated to each piconet i. The subset of adjacent piconets can be different or not. Advantageously, they are different.

In a piconet, the piconet coordinator periodically broadcasts general information to all the devices of the piconet using the broadcast code Gᵢ^{bc}. Since the Cᵢ^{bc} code is known by each device of the piconet, the general information are received and considered by all the devices.

The Cᵢ^{RACH} is used by a device of the piconet or a new device intending to join the piconet in order to send a message to the piconet coordinator.

A reception code Cᵢ^{j} is associated to each device j of the piconet. This code is used by the devices of the piconet for encoding a message when they intend to send a message to the particular device j.

The piconets are created step by step, each time a new device is added in the ad-hoc radio communication system.

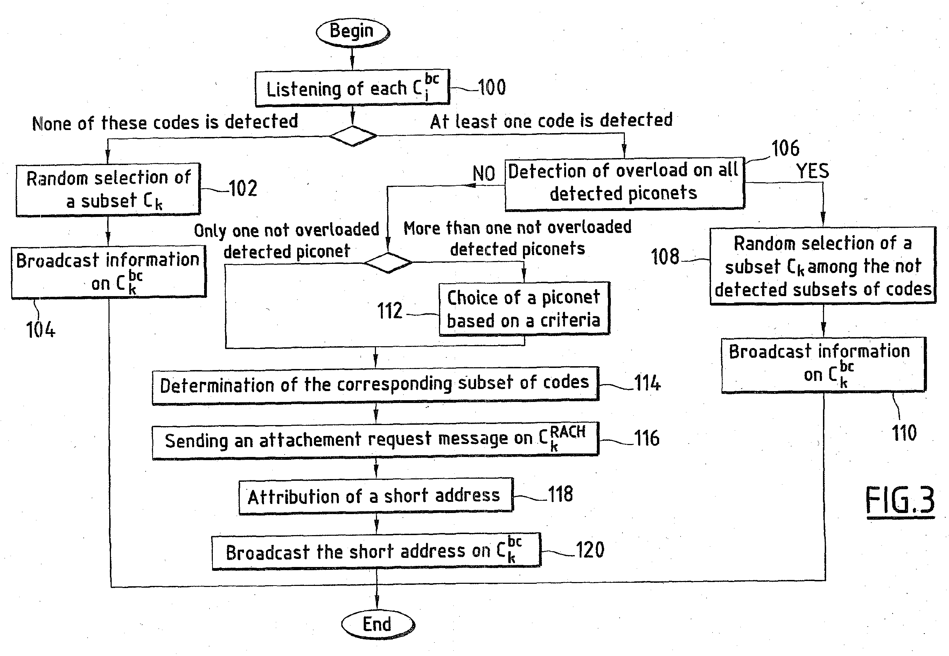

The method for channel allocation will now be disclosed with reference to figures 3 and 4.

When a new device is added, it tries to join an existing piconet. In this aim, it first listens to its radio environment.

Referring to figure 3, at step 100, the new device listens successively to all the broadcast codes Cᵢ^{bc}, i∈{1,...,n} which could have been broadcasted by the piconet coordinators as shown by M1 on figure 4. If none of these codes is detected, it selects randomly a used subset of codes Cₖ, at step 102, and starts to broadcast information on the associated broadcast code Cₖ^{bc}, at step 104. Thus, the new device becomes a piconet coordinator and creates its own piconet.

In the case where one or several broadcast codes Cᵢ^{bc} have been detected, the new device determines, at step 106, if some piconets are available to receive it.

More precisely, it determines for each piconet, if this piconet is able to correctly work with an additional device.

To determine the availability of a piconet, a criteria based on the load of the piconet is applied. The measure for the load of the piconet is carried out by the new device and the measured load is compared to a overload thresold. A set of available piconets is thus determined.

If the set of available piconets is empty, which means that all the detected piconets are overloaded, a subset of codes Cₖ different from those dedicated to the detected piconets is selected, at step 108.

Information are then broadcasted by the new device using the broadcast code Cₖ^{bc} of the selected subset Cₖ. A new piconet k is created, and the new device is the piconet coordinator of the new piconet.

If the set of available piconets contains more than two piconets, the new device classifies them according to a predetermined criteria. In a preferred embodiment, this criteria is the radio quality.

At step 112, it selects the piconet having the best result according to the applied criteria. In the present case, the selected piconet is the one with the best reception quality.

If there is a single piconet in the set of available piconets, this piconet is selected to be joined by the new device.

At step 114, the new device determines the subset of codes Cₖ used in the selected piconet from the broadcast code Cₖ^{bc} which has been listened. Since the subset of codes is memorised in the device, it determines the random access code Cₖ^{RACH}.

From that point, a network attachment procedure is implemented. The messages sent are illustrated on figure 4.

At step 116, the new device sends an attachment request message M2 by using the random access code Cₖ^{RACH}. The attachment request message M2 includes attributes relating to the new device. These attributes are for example the IP address, the type and the functionalities of the new device.

The piconet coordinator decides then according to available resources to accept or not the new device in the piconet. In the positive case, it attributes a short address on 8 bits to the new device as in the 802.15.3 system, at step 118. That address corresponds to the reception code Cₖ^{j} and is used as a pointer to a reception code Cₖ^{j} to be used by the new device for reception of data.

The address is sent in an attachment response M3 which is broadcasted on Cₖ^{bc} code.

At step 120, the piconet coordinator then broadcasts information M4 concerning the new device j joining the piconet to all the other devices of the piconet. The information are sent by using the broadcast code Cₖ^{bc}. The information include the attributes such as the IP address, the type and the functionalities of the new device together with its short address correspond-ing to its reception code Cₖ^{j}. Thus, all the devices of the piconet can then determine from the short address the code Cₖ^{j} to use to get in communication with the new device.

After having joined a piconet, a device periodically listens to its reception code Cₖ^{j}.

If a device B wants to send some data to another device C in a same piconet i, device B listens to the broadcast code Cᵢ^{bc} of the piconet to determine the reception code Cᵢ^{c} for device C and the attributes of device C.

Device B sends then a connection request message to device C by using the reception code Cᵢ^{c} of device C. The connection request message contains a attributes relating to expected receiving device C so that device C can determine whether it is the actual expected destination. These attributes are for example a piconet identifier or a functionality of the expected receiving device C such as the type of expected receiver.

Device C considers and processes the following data sent by device B only, if the attributes contained in the connection request message actually relating to it. On reception of a connection request message containing attributes relating to it, device C sends an acknowledgement message to device B informing device B that the following data can be sent and will be processed by it.

Such an identification process is useful for avoiding two devices from two different piconets which have the same reception code to process the sent data. Indeed, nothing can guarantee that two neighbouring piconets do not use the same subset of codes.

## Claims

1. Method for channel allocation in an ad-hoc radio communication system comprising devices having an equivalent communication architecture, the devices being gathered in several piconets, the devices of a same piconet being able to communicate with one another, a piconet coordinator (PNC) being defined among the devices for each piconet, the multiple access scheme for the radio communication between the devices being a Code Division Multiple Access (CDMA) scheme,
**characterized in that** the set of available codes is split into pre-defined disjoined subsets of codes (Cᵢ), all the subsets of codes (Cᵢ) being known by each device, and all the devices of a same piconet using codes in the same associated subset of codes (Cᵢ) for communicating with one another,
and **in that** for each new device added in the ad-hoc radio communication system, it includes the following steps :
- the new device scans its radio environment looking for at least one used subset of codes (Cᵢ) which is associated to a piconet,
- depending on the or each found used subset of codes (Cᵢ) :
. the new device becomes a piconet coordinator (PNC) of a new piconet and selects a subset of codes (Cᵢ) for the new piconet, or
. the new device decides to join an existing piconet among a set of available piconets, the subset of codes of which is already used and uses said subset of codes for the next communications with other devices of the joined piconet.

2. Method according to claim 1, **characterized in that** a broadcast code (Cᵢ^{bc}) is defined in each subset of codes (Cᵢ) for the piconet coordinator (PNC) to broadcast information towards all the devices of the piconet and **in that** each new device added in the ad-hoc radio communication system listens to the radio environment looking for a or each broadcast code (Cᵢ^{bc}) for determining the or each used subset of codes (Cᵢ).

3. Method according to any one of the preceding claims, **characterized in that**, if the new device found at least one used subset of codes (Cᵢ) associated to a piconet, the new device determines, by applying an availability criteria, the set of available piconets among the piconets associated to the or each found used subset of codes (Cᵢ), and **in that** the set of available piconets only contains the piconets which complies with the availability criteria.

4. Method according to claim 3, **characterized in that** the availability criteria is based on the load of the piconet.

5. Method according to any one of the preceding claims, **characterized in that** :
- if the set of available piconets is empty, the new device becomes a piconet coordinator (PNC) of a new piconet and selects a not yet used subset of codes (Cᵢ) for the new piconet,
- if the set of available piconets contains a single piconet, the new device joins said single piconet and uses the subset of codes (Cᵢ) of said single piconet for the next communications ; and
- if the set of available piconets contains at least two piconets, the piconets are ordered according to a predetermined criteria and the new device joins the first piconet in the set of ordered available piconets.

6. Method according to claim 5, **characterized in that** said criteria is the radio quality.

7. Method according to any one of the preceding claims, **characterized in that**, when joining an existing piconet, the new device sends a request for attachment to the piconet coordinator (PNC) of the piconet and on reception of said request for attachment, the piconet coordinator (PNC) sends to the new device an indication of a reception code (Cᵢ^{j} ) among the subset of codes (Cᵢ) associated to the piconet, the reception code (Cᵢ^{j} ) being to be used by the new device for reception of data.

8. Method according to claim 7, **characterized in that** said indication of the reception code (Cᵢ^{j} ) to be used for reception of data is a pointer on 8 bits as defined in 802.15.3 standard, said pointer indicating the reception code (Cᵢ^{j}) as known by the new device.

9. Method according to any one of claims 7 and 8, **characterized in that**, after a new device has joined a piconet, the piconet coordinator (PNC) sends, to all the devices of the piconet, an identification of the new device together with an indication of the reception code (Cᵢ^{j} ) to be used for reception by the new device.

10. Method according to any one of the preceding claims, **characterized in that**, when sending data with a given reception code (Cᵢ^{j}) to another device in the same piconet, a device sends attributes relating to the expected receiving device, and **in that** a device, the reception code (Cᵢ^{j} ) of which is the given reception code (Cᵢ^{j} ), processes the sent data only if the sent attributes relate to it.

11. Device for an ad-hoc radio communication system, said system comprising devices having an equivalent communication architecture, the devices being gathered in several piconets, the device being able to communicate with other devices of a same piconet by implementing a Code Division Multiple Access (CDMA) transmission method,
**characterized in that** the set of available codes is split into pre-defined disjoined subsets of codes (Cᵢ), the device comprises means in which all the subsets of codes (Cᵢ) are stored, and the device is adapted to use the codes from a subset of codes (Cᵢ) associated to a piconet for communicating with other devices of the piconet,
and **in that** the device includes :
- means for scanning the radio environment looking for at least one used subset of codes (Cᵢ) which is associated to a piconet when the device is added in the ad-hoc radio communication system, and
- means for:
- becoming a piconet coordinator (PNC) of a new piconet and selecting a subset of codes (Cᵢ) for the new piconet, or
- joining an existing piconet among a set of available piconets, the subset of codes of which is already used and using said subset of codes for the next communications with other devices of the joined piconet,
depending on the or each found used set of codes (Cᵢ).

12. Ad-hoc radio communication system comprising devices having an equivalent communication architecture, the devices being gathered in several piconets, the devices of a same piconet being able to communicate with one another, each piconet including a piconet coordinator (PNC), the multiple access scheme for the radio communication between the devices being a Code Division Multiple Access (CDMA) scheme,
**characterized in that** the set of available codes is split into pre-defined disjoined subsets of codes (Cᵢ), all the subsets of codes (Cᵢ) being known by each device, and all the devices of a same piconet using codes in the same associated subset of codes (Cᵢ) for communicating with one another,
and **in that** each device includes :
- means for scanning the radio environment looking for at least one used subset of codes (Cᵢ) which is associated to a piconet when the device is added in the ad-hoc radio communication system, and
- means for:
- becoming a piconet coordinator (PNC) of a new piconet and selecting a not yet used subset of codes (C,) for the new piconet, or
- joining an existing piconet among a set of available piconets, the subset of codes of which is already used and using said subset of codes for the next communications with other devices of the joined piconet,
depending on the or each found used set of codes (Cᵢ).
